(19) Europäisches Patentamt
European Patent Office
Office européen des brevets

(11) **EP 2 358 514 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **09771652.6**

(22) Anmeldetag: **12.11.2009**

(51) Int Cl.:
**B29C 45/76** *(2006.01)*

(86) Internationale Anmeldenummer:
**PCT/AT2009/000429**

(87) Internationale Veröffentlichungsnummer:
**WO 2010/057231 (27.05.2010 Gazette 2010/21)**

(54) **EINSTELLVERFAHREN ZUM TEILAUTOMATISCHEN HERSTELLEN EINER PROZESSFÄHIGEN GRUNDEINSTELLUNG FÜR EINE SPRITZGIEßMASCHINE**

SETTING METHOD FOR THE SEMI-AUTOMATIC PRODUCTION OF A PROCESS-CAPABLE BASIC SETTING FOR AN INJECTION MOLDING MACHINE

PROCÉDÉ DE RÉGLAGE POUR ÉTABLIR DE MANIÈRE PARTIELLEMENT AUTOMATIQUE UN RÉGLAGE DE BASE OPÉRATIONNEL POUR UNE PRESSE D'INJECTION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.11.2008 AT 18182008**

(43) Veröffentlichungstag der Anmeldung:
**24.08.2011 Patentblatt 2011/34**

(73) Patentinhaber: **KEBA AG**
**A-4041 Linz (AT)**

(72) Erfinder: **FRIESENBICHLER, Walter**
**A-8712 Proleb (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
**WO-A1-99/41057     JP-A- 61 025 816**
**US-A- 4 816 197**

• **LANGECKER G R: "ANFAHRSTRATEGIE" KUNSTSTOFFE, CARL HANSER VERLAG, MUNCHEN, DE, Bd. 85, Nr. 7, 1. Juli 1995 (1995-07-01), XP000515012 ISSN: 0023-5563**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Einstellverfahren zum teilautomatischen Herstellen einer prozessfähigen Grundeinstellung für eine Spritzgießmaschine zur Verarbeitung von Formmassen aus Kunststoff, wie dies im Anspruch 1 angegeben ist.

Beim beanspruchten Verfahren handelt es um eine halbautomatische, reproduzierbare und möglichst betriebssichere Ermittlung und Einstellung der wichtigsten Betriebs- und Prozessparameter einer Kunststoff-Spritzgießmaschine, wobei das Ziel dieses Einstellverfahrens darin liegt, beim Einsatz einer neuen oder geänderten Kombination von Werkzeug, Werkstoff und Spritzgießmaschine möglichst rasch zu einer prozessfähigen Ersteinstellung zu finden bzw. eine möglichst stabile Grundeinstellung zu erzielen.

Wie an sich bekannt, stellt das Kunststoff-Spritzgießverfahren einen direkten und voll automatisierbaren Weg zur Herstellung eines Fertigteils aus einem Rohstoff dar, wobei in der Regel keine oder nur eine geringe Nachbearbeitung des erhaltenen Formteils erforderlich ist und eine hohe Reproduktionsgenauigkeit gewährleistet wird. Ein Spritzgießverfahren ermöglicht eine preisgünstige und rasche Fertigung von einfachen bis hin zu ausgesprochen komplexen Kunststoffteilen in hohen und höchsten Stückzahlen. Dies begründet zusammen mit den vielfältigen Eigenschaften der verarbeitbaren Kunststoffe, wie Thermoplaste, Duroplaste oder Elastomere, die enorme Bedeutung des Spritzgießverfahrens in der modernen Fertigungstechnik, wobei Spritzgießverfahren häufig als die am höchsten entwickelten Verarbeitungsprozesse in der Kunststoffverarbeitung angesehen werden.

Bei den üblichen Spritzgießverfahren wird ein vorzugsweise makromolekularer Werk- bzw. Kunststoff, welcher von einem Rohstoffhersteller in der Regel als Pulver oder Granulat angeliefert wird, in einen fließfähigen Zustand überführt und in ein mehrteiliges Form-Werkzeug gepresst, in welchem diese Formmasse anschließend erstarrt und das Formteil nach dem Öffnen des Form-Werkzeuges entnommen bzw. ausgestoßen wird. Zahlreiche Parameter und vielschichtige Abhängigkeiten der diversen Prozessgrößen von Material, Werkzeug und Maschine resultieren in einem recht komplexen Einstellvorgang, der nur von entsprechend hoch qualifiziertem Personal mit ausreichender Zuverlässigkeit, Sicherheit und Effizienz bewältigt werden kann. Die Hersteller der Spritzgießmaschinen bieten oftmals Kurse für das Personal der Maschinenbetreiber an, in denen verschiedene Vorgehensweisen für eine erfolgreiche Ersteinstellung vermittelt werden. Die Schulung dieses Bedienpersonals stellt dabei einen nicht unerheblichen Kosten- und Zeitfaktor dar.

Es besteht daher schon seit längerem das Bestreben und der Wunsch, den gesamten Spritzgießprozess einschließlich des Einrichtvorganges möglichst zu automatisieren, die Reproduzierbarkeit der erhaltenen Fertigungsqualität zu verbessern, die Bedienung und Einstellung der Spritzgießmaschinen zu vereinfachen und das dafür erforderliche Expertenwissen möglichst umfassend in die Steuerung der Maschine zu integrieren.

Der vollständige Einstellvorgang einer Spritzgießmaschine gliedert sich üblicherweise in eine Ermittlung einer prozessfähigen Ersteinstellung und in eine nachfolgende Optimierung der Ersteinstellung während des laufenden Spritzgießprozesses. Das erfindungsgemäße Verfahren betrifft die halbautomatische, geführte und möglichst zuverlässige Ermittlung einer prozess- bzw. funktionsfähigen Ersteinstellung. Die derart erhaltene Ersteinstellung ist dann Ausgangspunkt für die nachfolgende Optimierungsphase im laufenden Prozess.

In der Vergangenheit wurden bereits Untersuchungen und Arbeiten vorgenommen, deren Ziel darin lag, diesen Einstellprozess und das dafür wesentliche Expertenwissen zumindest teilweise in die Maschinensteuerung zu integrieren. Entsprechende Arbeiten auf diesem Gebiet wurden beispielsweise am Institut für Kunststoffverarbeitung an der Montanuniversität Leoben in Österreich durchgeführt. Siehe dazu beispielsweise die Diplomarbeit von Eva-Maria Kern am Institut für Kunststoffverarbeitung der Montanuniversität Leoben: "Anfahrstrategie und Optimierung einer Spritzgießmaschine".

Weitere einschlägige Publikationen zum Themenkreis der Einstellung von Spritzgießmaschinen lauten wie folgt:

Langecker G. R.: Anfahrstrategie. Kunststoffe 7/1995. Carl Hanser Verlag.

Gissing K., Knappe W.: Verzögerungsabhängiges Umschalten von Spritz- auf Nachdruck. Österreichische Kunststoffzeitschrift 12/1981.

Sarholz R.: Rechnerische Abschätzung des Spritzgießprozesses als Hilfsmittel zur Maschineneinstellung. Dissertation an der RWTH Aachen, 1980.

Darüber hinaus ist aus der WO 99/41057 A1 (Moldflow) ein gattungsgemäßes Verfahren zur automatischen Optimierung der Einstellungen einer Spritzgießmaschine bekannt. Zur Durchführung dieser automatischen Optimierung wird vorgeschlagen, zuerst mit den Grundeinstellungen probeweise zumindest einen Spritzgießteil zu fertigen. Gemäß einem ersten Verfahrensverlauf wird sodann der gefertigte Probespritzgießteil auf Defekte hin untersucht und es werden der Einspritzhub der Förderschnecke und/oder die Einspritzgeschwindigkeit der Formmasse entsprechend angepasst, wenn Defekte wie beispielsweise eine Gratbildung am Probespritzgießteil feststellbar sind. In einem zweiten, alternativen Verfahrensverlauf wird während der Fertigung des Probespritzgießteils der Einspritzdruckverlauf bei konstanter Einspritzgeschwindigkeit gemessen, ein mittlerer Einspritzdruck berechnet und der Verlauf der Einspritzgeschwindigkeit so angepasst, dass der tatsächlich auftretende Einspritzdruck zu jeder Zeit möglichst nahe am berechneten mittleren Wert liegt. Gemäß einem dritten vorgeschlagenen Verfahrensverlauf wird während der Fertigung des Probespritzgießteils eine Rückschlagbewegung der Förderschnecke in der Nachdruckphase bestimmt und bei einer zu großen Rückschlagbewegung wird der Druck, der in der Nachdruckphase aufgebracht wird, angepasst. Entsprechend einem vierten vorgeschlagenen Verfahrensverlauf wird während der Fertigung des Probespritzgießteils die Zeit ermittelt, nach deren Ablauf nach dem Füllen der Spritzgießform die Formmasse im Eingangsbereich der Spritzgießform erstarrt ist und es wird die Haltezeit der Spritzgießmaschine entsprechend der ermittelten Erstarrungszeit der Formmasse im Einlassbereich der Spritzgießform angepasst, sodass der Probespritzgießteil keine nennenswerten Defekte mehr aufweist.

Aus der JP 61 025816 A (Tsuoisu) ist ein gattungsgemäßes Verfahren zur Verbesserung der Einstellungen einer mit einem zusätzlichen Einspritzkolben ausgestatteten Spritzgießmaschine bekannt. Gemäß dem vorgeschlagenen Verfahren drückt die Einspritzschnecke die plastifizierte Formmasse in einen Einspritzzylinder und bewegt dabei den Einspritzkolben im Zylinder nach hinten. Die Geschwindigkeit dieser Kolbenbewegung wird von einem Sensor erfasst und neben weiteren Messwerten, wie beispielsweise dem Druck im Einspritzzylinder, einer Berechnungsvorrichtung zugeführt, welche aus den Eingangswerten die Viskosität der Formmasse berechnet. Aus dieser Viskosität werden unter Zuhilfenahme von weiteren Prozessgrenzwerten, wie beispielsweise des optimalen Temperaturbereichs der Formmasse, die Werte für die Einspritzgeschwindigkeit und die Einspritzzeit bestimmt. Anschließend wird der Einspritzkolben entsprechend dieser Werte angesteuert und die Formmasse wird in das Form-werkzeug eingebracht.

Die Implementierung eines steuerungsbasierten Anfahrassistenten nach Konzepten basierend auf der erstgenannten Arbeit hat bereits aussichtsreiche Ergebnisse für eine bestimmte Anzahl von Kombinationen aus Maschine, Material und Werkzeug gezeigt. Besonderes Kennzeichen dieses Konzeptes ist der sehr universelle Ansatz, der mit einem Minimum an Basisinformationen über Werkstoff, Werkzeug und Maschine das Auslangen findet und damit ohne besondere Anpassungsarbeiten für eine Vielzahl unterschiedlicher Spritzgießmaschinen und Einsatzfälle verwendbar ist. Ein solcher Anfahrassistent führt nach anfänglicher Eingabe einiger weniger Daten über das verwendete Kunststoff-Material und über die Konfiguration des Formwerkzeugs und der Spritzgießmaschine, welche Daten vom Bediener einzugeben sind, eine Reihe von versuchsweisen Fertigungszyklen durch, wobei die entstehenden Formteile anhand einfach zu überprüfender Qualitätsmerkmale von der Bedienperson zu bewerten sind. Die Bewertungen der Bedienperson werden vom Anfahrassistenten zur planmäßigen Änderung der Betriebsparameter herangezogen, sodass der Spritzgießprozess allmählich zu Formteilen mit ausreichend guter Qualität führt. Die Vorgaben und Anpassungen durch den Anfahrassistenten beruhen auf Empfehlungen des Werkstoffherstellers, des Maschinenherstellers sowie auf grundlegenden physikalischen Zusammenhängen und Modellen für Teilprozesse des Spritzgießprozesses. Der Umfang der durch die Bedienperson bereitzustellenden Daten, der Aufwand zur Begutachtung und Bewertung der probeweise gefertigten Teile sowie die erforderlichen Spezialkenntnisse über die Parametrierung des Spritzgießprozesses werden somit durch die technischen Vorgaben bzw. Unterstützungen des Anfahrassistenten reduziert.

Diese Einstellverfahren werden nach einem für die Spritzgießmaschine und das Form-Werkzeug sicheren und reproduzierbaren Schema durchgeführt. Durch dieses Schema ist das Risiko für eine Beschädigung oder eine Fehlbedienung minimiert. Dennoch wurden bislang Fälle und Kombinationen aus Werkstoff, Werkzeug und Maschine beobachtet, für welche mit dem zuvor beschriebenen Anfahrassistenten keine zufriedenstellenden Ergebnisse gefunden werden konnten. Insbesondere wurden fallweise Ersteinstellungen mit nicht ausreichend guter Qualität getroffen oder es wurden ausreichend gute Ergebnisse erst nach einer unverhältnismäßig großen Anzahl von Probezyklen und Parameteranpassungen erreicht.

Aufgabe der gegenständlichen Erfindung ist es daher, das vorbekannte Verfahren dahingehend zu verbessern, dass es bei einer erweiterten Anzahl von Kombinationen aus Werkstoff, Werkzeug und Maschine mit einer möglichst geringen Anzahl von Probezyklen und mit einer größeren Zuverlässigkeit zu einer erfolgreichen Grund- bzw. Ersteinstellung für eine ausreichend gute Qualität des Formteils führt.

Diese Aufgabe wird durch die Maßnahmen gemäß Anspruch 1 gelöst.

Ein sich durch das erfindungsgemäße Vorgehen ergebender Vorteil liegt darin, dass bereits nach kurzer Zeitdauer eine Grundeinstellung gefunden werden kann, welche mit relativ hoher Zuverlässigkeit eine erhöhte Qualität der produzierten Formteile gewährleistet. Als eine die semiautomatische Ersteinstellung wesentlich bestimmende Einflussgröße wurde der große, insgesamt mögliche Wertebereich des Fließverhaltens, insbesondere der Viskosität, der verarbeitbaren Kunststoffe bzw. Formmassen identifiziert. Da es sich dabei um sogenannte strukturviskose Werkstoffe handelt, ist diese Viskosität nicht bloß von der Masse- bzw. der Verarbeitungstemperatur der Werkstoffe bzw. Formmasse abhängig, sondern ist das Fließverhalten bzw. die Viskosität der Formmasse vor allem auch von der jeweils vorliegenden bzw. gewählten Ausstoß- bzw. Fließgeschwindigkeit, d.h. von der Einspritzgeschwindigkeit der Formmasse abhängig. Dabei bewirkt eine erhöhte Ausstoß- bzw. Fließgeschwindigkeit der Kunststoffschmelze eine erhöhte Scherung und Entschlaufung der Polymerketten der Kunststoffschmelze, wodurch die Fließfähigkeit der Kunststoffschmelze zunimmt, d.h. deren Viskosität abnimmt.

Genau hier setzt das erfindungsgemäße, teilautomatische Einstellverfahren an. Bei diesem Einstellverfahren ist insbesondere von Vorteil, dass eine relativ zuverlässige bzw. von Fremdeinflüssen möglichst befreite Ermittlung des Fließverhaltens, insbesondere der Viskosität der Kunststoffschmelze erzielt wird. Dazu wird hoch vor Beginn der Probe-Fertigungszyklen mit aufgesetztem Werkzeug zumindest ein freier Ausspritzvorgang nur durch die Düse ins Freie, d.h. ohne aufgesetztes Form-Werkzeug durchgeführt. Aus der dabei auftretenden Durchflussmenge, dem gemessenen Staudruck an der Düse und aus der Geometrie der Düse wird sodann eine Kenngröße für die Viskosität der Werkstoffmasse gewonnen bzw. errechnet. Diese Kenngröße für die Viskosität wird dann zur Anpassung der Ausgangswerte und/oder der Iterationsschrittweiten für nachfolgende Probe-Fertigungszyklen herangezogen. Der entscheidende Vorteil der steuerungstechnisch geführten bzw. halbautomatischen Ersteinstellung entsprechend dem erfindungsgemäßen Verfahrensablauf liegt somit vor allem darin, dass eine reproduzierbare und von einschlägigen Fachkenntnissen der Bedienperson relativ unabhängige sowie hinsichtlich Fertigungsqualität und Zyklusdauer bereits ausgezeichnete Grundeinstellung der Maschine erhalten wird. Der Einstellprozess erfolgt dabei dennoch auf eine besonders funktions- bzw. prozesssichere Weise, sodass eine Beschädigung von Maschine und Werkzeug zuverlässig vermieden wird.

Durch die Maßnahmen gemäß Anspruch 2 und/oder 3 ist eine zuverlässige Erfassung der Schmelzenviskosität bzw. des jeweiligen Fließverhaltens der Kunststoffschmelze erzielbar. Darüber hinaus sind die jeweils benötigten Sensoriken bzw. Detektionsmittel zur Erfassung der entsprechenden Parameterwerte überaus funktionszuverlässig. Ferner sind bei den meisten Typen von Spritzgießmaschinen keine gesonderten bzw. keine zusätzlichen Messmittel zu implementieren, um die jeweils vorliegende Viskosität der Kunststoffschmelze zumindest annähernd rechnerisch ermitteln zu können.

Von Vorteil sind auch die Maßnahmen nach Anspruch 4, da dadurch die höchste Viskosität bzw. die größte Zähflüssigkeit der Formmasse als Ausgangsbasis für die Einstellungen an den davon abhängigen Prozessparametern der Spritzgießmaschine herangezogen wird. Dadurch wird ein möglichst hoher Formfüllungsgrad gewährleistet, sodass relativ rasch zu einer regulären Produktionsphase übergegangen werden kann.

Ein relativ kurzfristig erfolgreiches Einstellverfahren bzw. eine Einstellprozedur mit relativ wenigen Iterationszyklen kann auch durch die Maßnahmen gemäß Anspruch 5 erzielt werden. Insbesondere werden durch die Berücksichtigung von vorhandenen materialspezifischen Erfahrungswerten für die Viskosität und deren Abhängigkeit von der jeweiligen Ausstoß- bzw. Fließgeschwindigkeit der Kunststoffschmelze gute Ausgangswerte für die nachfolgenden Probezyklen gefunden und wird damit möglichst rasch bzw. mit nur wenigen Probezyklen eine prozessfähige Grundeinstellung hergestellt.

Bei den Maßnahmen gemäß Anspruch 6 ist von Vorteil, dass ohne eine größere Anzahl iterativer Versuche ein geeigneter Grenzwert für den Einspritzdruck gefunden wird, bei dem das Form-Werkzeug während der Einstellphase einerseits vollständig gefüllt wird, andererseits aber auch nicht überspritzt wird, sodass keine oder nur vernachlässigbare Grate an den Formteilen entstehen. Außerdem wird sichergestellt, dass keine Überbeanspruchung oder gar Beschädigung des Form-Werkzeuges eintritt.

Durch das iterative, probeweise Vorgehen nach Anspruch 7 wird mit hoher Zuverlässigkeit relativ rasch, planmäßig und reproduzierbar eine prozessfähige Einstellung ermittelt, mit welcher qualitativ entsprechende Formteile produziert werden können.

Durch die vorteilhaften Maßnahmen nach Anspruch 8 können einerseits Überprüfungen durchgeführt werden, inwiefern sich die jeweiligen Prozessparameter wertemäßig entwickelt bzw. verändert haben. Daraus kann die Bedienperson entsprechendes Know-How ableiten und so künftige Einstellprozeduren weiter beschleunigen. Außerdem kann dadurch eine Datenbank aufgebaut werden, durch welche den variierenden Einstellungen bzw. Konfigurationen der Maschine die jeweils passenden bzw. bisher erfolgreich angewandten Einstellungen einfach zugeordnet werden können, um in einfacher Art und Weise nachfolgend wieder abgerufen und erneut angewandt werden zu können. Darüber hinaus werden Situationen, Bedingungen und die dabei vom Einstellassistenten durchgeführten Einstellprozeduren und ermittelten Einstellwerte dokumentiert um Problemfälle identifizieren und den Einstellassistenten weiter optimieren zu können.

Durch die Maßnahmen gemäß Anspruch 9 wird sichergestellt, dass nur autorisierte Bedienpersonen Veränderungen bzw. Anpassungen der Einstellungen der Spritzgießmaschine vornehmen können. Dadurch werden Beeinträchtigungen von Sachwerten bzw. Qualitätseinbußen infolge unsachgemäßer Manipulationen an den Einstellungen vermieden. Darüber hinaus wird sichergestellt, dass nur entsprechend berechtigte bzw. unterwiesene Bedienpersonen die jeweiligen Bedien- bzw. Einstellhandlungen vornehmen können. Ferner ist dadurch eine entsprechende Nachvollziehbarkeit gewährleistet, wodurch bei diversen Veränderungen der Maschineneinstellungen erhöhtes Verantwortungsbewusstsein erzielt wird.

Durch die Maßnahmen gemäß Anspruch 10 kann einerseits die Wahrscheinlichkeit von Fehlern während des Einstellverfahrens reduziert werden. Zudem wird es dadurch ermöglicht, den Einstellvorgang an der Spritzgießmaschine nochmals zu beschleunigen.

Mittels der Maßnahmen gemäß Anspruch 11 behält die Bedienperson die volle Entscheidungskraft in Bezug auf den vom Anfahrassistenten empfohlenen Ablauf bzw. Unterstützungsumfang. Insbesondere kann die Bedienperson jederzeit frei entscheiden, ob eine Unterstützung durch Interaktion mit dem Anfahrassistenten für die jeweilige Einstellphase erforderlich ist oder nicht. Beispielsweise kann dadurch eine Hilfeleistung nur für jene Prozessphasen in Anspruch genommen werden, in welchen eine solche erforderlich erscheint. Demgegenüber kann in jenen Einstellphasen, in welchen keine Hilfestellung erforderlich ist, der Anfahrassistent deaktiviert werden und dadurch unter Umständen ein rascheres Vorankommen im Einstellverfahren erzielt werden.

Durch die Maßnahmen gemäß Anspruch 12 wird eine praktikable "Exit-Möglichkeit" geschaffen, durch welche eine Bedienperson beim Eintreten besonderer Umstände, wie zum Beispiel beim Erkennen eines Fehlers oder Irrtums bei der Einstellung oder Konfiguration der Spritzgießmaschine, einen geordneten Abbruch des Verfahrens durchführen kann. Insbesondere wird dadurch ein nachteiliges, rigoroses Abschalten des Anfahrassistenten durch eine Bedienperson, was bei komplexen Spritzgießmaschinen und Prozessen zu Beschädigungen führen kann, zumindest weitestgehend vermieden.

Durch die Maßnahmen gemäß Anspruch 13 wird eine so genannte Endlosschleife verhindert. Insbesondere wird dann, wenn mit der vorhandenen Konfiguration eine zufrieden stellende Formteilqualität offenbar nicht erreichbar ist, das Einstellverfahren mit einem entsprechenden Hinweis beendet.

Durch die Maßnahmen gemäß Anspruch 14 wird sichergestellt, dass bereits bewährte bzw. optimale Prozessparameter erhalten bleiben und auf diese zurückgegriffen werden kann, wenn sie weiterhin als am besten geeignet anzusehen sind. Außerdem kann bei einem nicht erfolgreichen Abschluss des durch den Anfahrassistenten unterstützten Einstellverfahrens jederzeit auf zuvor bereits angewandte Werte bzw. Prozessparameter zurückgegriffen werden.

Schließlich sind die Maßnahmen nach Anspruch 15 von Vorteil, da sich dadurch das für die Bedienperson erforderliche Wissen über das verwendete Material auf eine entsprechend identifizierende Kennung reduzieren lässt. Mehrere für die Verarbeitung des jeweiligen Materials vorteilhafte oder einschränkende Prozessparameter müssen nicht aufwändig und potenziell fehleranfällig aus Datenblättern oder Tabellen des Herstellers gelesen und eingegeben werden, sondern werden automatisch anhand der Materialkennung eingestellt. Der Komfort, aber auch die Effizienz bezüglich der Findung einer prozessfähigen Grundeinstellung werden dadurch deutlich erhöht. Zudem wird auch dadurch die Wahrscheinlichkeit von Fehleinstellungen bzw. Fehlbedienungen deutlich reduziert.

Zum besseren Verständnis der Erfindung wird diese anhand der nachfolgenden Figuren näher erläutert.

Es zeigen jeweils in stark vereinfachter, schematischer Darstellung:

Fig. 1 den Aufbau und die wesentlichsten Komponenten einer Spritzgießmaschine;

Fig. 2 die Plastifiziereinheit einer Spritzgießmaschine;

Fig. 3 ein Ausführungsbeispiel einer Düse einer Spritzgießmaschine;

Fig. 4 ein Diagramm umfassend die Parameter Viskosität, Einspritzdruck und mittlere Wandstärke des zu produzierenden Formteils.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

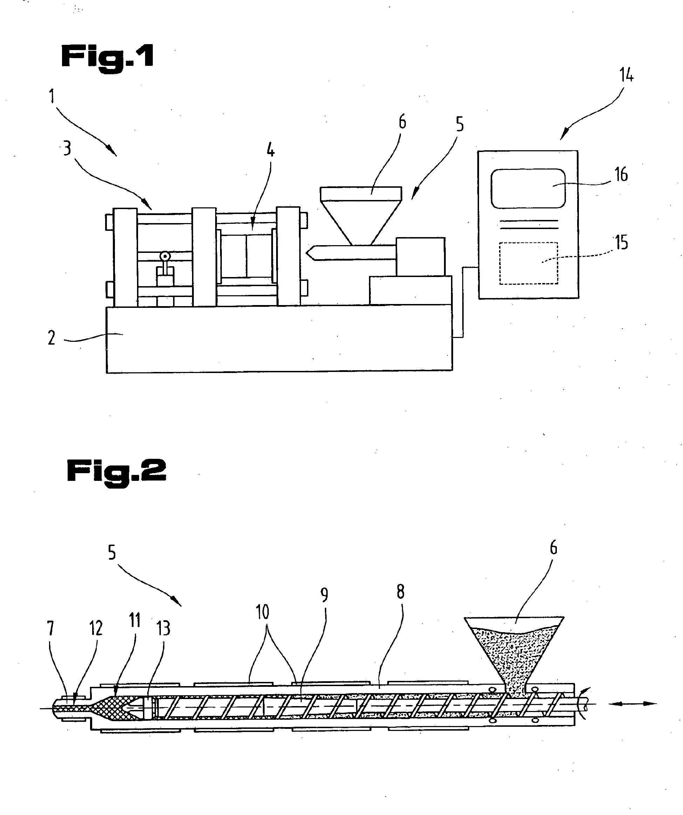

In den Fig. 1 und 2 sind die wesentlichsten Komponenten einer standardmäßigen Spritzgießmaschine 1 zur Verarbeitung von Kunststoffen stark vereinfacht dargestellt. Eine solche Spritzgießmaschine 1 zur Durchführung eines Kunststoff-Spritzgießverfahrens weist unter anderem ein Maschinenbett 2, eine Schließeinheit 3 zum Öffnen und Schließen eines aufgespannten, mehrteiligen Form-Werkzeuges 4 und eine Plastifiziereinheit 5 auf, mit welcher der Rohstoff aus einem Vorratsbehälter 6 entnommen, in den fließfähigen Zustand überführt und durch eine Düse 7 in das geschlossene Form-Werkzeug 4 gepresst wird.

Das Form-Werkzeug 4 ist häufig mittels einer Temperier- oder Kühleinrichtung beheizbar oder kühlbar, um bei der Verarbeitung elastomerer Kunststoffe den Vernetzungsprozess zu ermöglichen oder bei thermoplastischen Kunststoffen eine optimale bzw. rasche Erstarrung der Formmasse durch Abkühlung zu bewirken.

Die Plastifiziereinheit 5 umfasst unter anderem einen in mehreren Zonen beheizbaren Hohlzylinder 8. Eine darin angeordnete, drehbare und auch in Längsrichtung verschiebbare Schneckenwelle 9 transportiert das aus dem Vorratsbehälter 6 nachfallende Kunststoff-Granulat in den vorderen Abschnitt der Plastifiziereinheit 5. Dabei wird das Material zu einem gewissen Teil durch eine Heizung 10, vor allem aber durch die beim Transport auftretende Friktionswärme aufgeschmolzen, d.h. plastifiziert. Insbesondere wird das Granulat durch die Schneckenwelle 9 nicht nur gefördert, sondern auch geschert, wodurch der Kunststoff schmilzt und allmählich plastifiziert bzw. homogenisiert. Das plastifizierte Material sammelt sich im vorderen Abschnitt, insbesondere in einer Düsenvorkammer 11 der Plastifiziereinheit 5 an, wobei gleichzeitig die Schneckenwelle 9 nach hinten zurückweicht bzw. sich gegenüber der Düse 7 der Plastifiziereinheit 5 zunehmend distanziert. Sobald in der Düsenvorkammer 11 eine ausreichende Menge plastifizierten Form-Materials vorliegt, ist die Plastifizierphase abgeschlossen. Die Düsenvorkammer 11 bzw. die Düse 12 stellt dabei einen bevorzugten Erfassungsabschnitt 12 für die Temperatur der Kunststoffschmelze und/oder für den jeweils auftretenden Einspritzdruck der Kunststoffschmelze, d.h. der Formmasse dar.

Daraufhin wird in der so genannten Einspritzphase das plastifizierte Material durch die Düse 7 im vorderen Abschnitt der Plastifiziereinheit 5 ausgestoßen und in das an der Düse 7 anliegende Form-Werkzeug 4 gepresst, bis dieses vollständig gefüllt ist. Das Einspritzen der Formmasse erfolgt durch ein zunächst geschwindigkeitsgeregeltes, axiales Vorwärtsschieben der Schneckenwelle 9, wobei eine Rückflusssperre 13 am vorderen Ende der Schneckenwelle 9 ein Zurückweichen der Formmasse durch den Schneckengang verhindert. Die Schneckenwelle 9 wirkt also in der Einspritzphase wie ein Kolben.

Am Ende der Einspritzphase ist das Form-Werkzeug 4 vollständig gefüllt und es wird von der geschwindigkeitsgeregelten, axialen Vorwärtsbewegung der Schneckenwelle 9 auf eine druckgeregelte Bewegung umgeschaltet, wobei nur noch ein relativ geringer Weg zurückgelegt wird, bis die Schneckenwelle 9 schließlich stillsteht. Diese Phase wird als Nachdruckphase bezeichnet, in welcher das mit der Abkühlung bzw. Vernetzung der Formmasse im Form-Werkzeug 4 einhergehende Schwinden durch weiteres geringes Nachfördern von Formmasse bzw. durch die Erstarrung unter Überdruck ausgeglichen wird. Diese Nachdruckphase ist besonders bedeutsam für die Qualität der gefertigten Formteile. Die Nachdruckphase ist beendet, sobald die Formmasse zumindest im Angusskanal des Form-Werkzeuges 4 verfestigt ist. Dann wird der axiale Druck auf die Schneckenwelle 9 abgestellt, die Düse 7 der Plastifiziereinheit 5 geschlossen und das Form-Werkzeug 4 von der Düse 7 getrennt, um während der restlichen Abkühlphase einen unerwünschten Wärmeübergang von der Düse 7 auf das Form-Werkzeug 4 zu vermeiden.

Nachfolgend beginnt die Abkühl- bzw. Vernetzungsphase, in der das Formteil im Form-Werkzeug 4 zumindest teilweise erstarrt. Nach ausreichender bzw. vollständiger Erstarrung wird das Form-Werkzeug 4 geöffnet und das Formteil entnommen oder ausgestoßen. Während der Abkühlphase wird in der Plastifiziereinheit 5 üblicherweise bereits wieder Material für den nächsten Fertigungszyklus aufgeschmolzen. Nach dem Schließen des Form-Werkzeuges 4 und dem Wiederanlegen an die Düse 7 der Plastifiziereinheit 5 ist die Spritzgießmaschine 1 bereit für den Einspritzvorgang von plastifizierter Formmasse für das nächste Formteil bzw. die nächste Teileserie.

Es sei darauf hingewiesen, dass der oben geschilderte Ablauf des Spritzgießprozesses teilweise stark vereinfacht und beispielhaft ist und nur zur Orientierung gedacht ist. Zahlreiche detaillierte Darstellungen und Varianten sind der umfangreichen einschlägigen Fachliteratur zu entnehmen.

Zum Herstellen eines prozessfähigen Ablaufes ist einerseits die Schließseite der Spritzgießmaschine 1 zu betrachten, dabei beispielsweise das Öffnen und Schließen des Form-Werkzeuges 4, die Auswerferbewegung und die Werkzeugtemperierung. Weiters hat natürlich die Spritzseite der Spritzgießmaschine 1, insbesondere die Plastifiziereinheit 5, wesentlichen Einfluss auf den Ablauf des Spritzgießprozesses. Dabei sind beispielsweise die Zylinderwandtemperatur, die Bewegung des Spritzaggregats und die Zeitpunkte bzw. Parametergrößen während der Einspritz- und Nachdruckphase maßgeblich.

Verschiedene maschinen- und werkzeugspezifische Einstellungen wie beispielsweise das Öffnen und Schließen des Form-Werkzeuges, die Auswerferbewegung, der Formsicherungsdruck und die Schließkraft wirken sich nicht oder nicht nennenswert auf den eigentlichen Prozessablauf und die jeweils erzielte Qualität der Formteile aus. Ihre Einstellung erfolgt in der Regel nach firmen- oder herstellerspezifischen Richtlinien bzw. sind diese Einstellungen bereits in einer Steuervorrichtung 14 der Spritzgießmaschine 1 entsprechend abgebildet. Ein iteratives Anpassen dieser Einstellungen ist für gewöhnlich nicht erforderlich.

Der Schwerpunkt des erfindungsgemäßen Einstellverfahrens liegt daher in der Ermittlung und Einstellung jener Betriebsparameter, welche den Prozessablauf und damit die Qualität der erhaltenen Formteile maßgeblich mitbestimmen. Als Basis für die Einstellungen dienen Erfahrungswerte und Richtlinien der Rohstoffhersteller, sowie einfache physikalische Zusammenhänge zur Beschreibung einzelner Teilprozesse. Die tatsächlich geeigneten Einstellwerte können jedoch aufgrund der vielfachen Abhängigkeiten von Werkstoff, Form-Werkzeug 4 und Spritzgießmaschine 1 nicht einfach vorgegeben werden, sondern sind diese üblicherweise in einem iterativen Prozess zu ermitteln. Ein Ziel des erfindungsgemäßen Einstellverfahrens ist unter anderem die Ermittlung dieser Einstellwerte mit einer möglichst geringen Anzahl an erforderlichen Iterationen und damit einer möglichst geringen Anzahl von Probefertigungszyklen.

Für eine zielführende Anfahrstrategie müssen unter anderem die Einflussgrößen Massetemperatur, Werkzeugtemperatur, Dosierweg bzw. Dosiervolumen, Staudruck, Einspritzgeschwindigkeit, Umschaltpunkt bzw. Umschaltkriterium auf Nachdruck, Nachdruckhöhe, Nachdruckzeit und Kühlzeit untersucht werden.

Aus den obigen Darlegungen ist erkennbar, dass es in einem solchen Spritzgießprozess zahlreiche Parameter mit vielschichtigen, gegenseitigen Beeinflussungen gibt, die für eine Erzielung eines stabilen Prozessablaufes bzw. für einen möglichst raschen Start eines qualitativ zufrieden stellenden Fertigungsprozesses eine erhöhte Herausforderung an das Bedienpersonal darstellen. Zum Zweck der halbautomatischen, geführten Ersteinstellung der Spritzgießmaschine 1 ist in deren Steuervorrichtung 14 ein Anfahrassistent 15 als Programmmodul implementiert. Dieser softwaretechnische Anfahrassistent 15 ist in der Art eines so genannten Wizards umgesetzt, wie er aus vielen herkömmlichen computerbasierten Anwendungsprogrammen bekannt ist. Dabei wird die Bedienperson über ein Bedienerinterface, insbesondere via diverse Ein- und Ausgabemittel 16 der Steuervorrichtung 14, beispielsweise über einen Bildschirm mit Touchscreen, schrittweise und systematisch durch die verschiedenen Phasen der Ersteinstellung geleitet. Die Steuervorrichtung 14 und/oder der Anfahrassistent 15 kann dabei als integraler Bestandteil der Spritzgießmaschine 1 und/oder als baulich eigenständige, gegebenenfalls auch als zentrale Einheit für mehrere Spritzgießmaschinen 1, ausgeführt sein.

Der Anfahrassistent 15 sammelt und ermittelt wesentliche Daten und Charakteristiken über das verwendete Spritzgießwerkzeug, insbesondere über das Form-Werkzeug 4, den verwendeten Spritzgießwerkstoff, insbesondere die Kunststoff-Formmasse und gegebenenfalls über die grundlegenden Betriebsdaten bzw. Betriebsweisen der Spritzgießmaschine 1. Diese Daten bzw. Charakteristiken sind teilweise von der Bedienperson einzugeben und/oder durch Testoperationen automatisiert ermittelbar.

Charakteristisch für den Einstellvorgang ist weiters, dass auch eine Durchführung von üblicherweise mehreren, versuchsweisen Fertigungszyklen erfolgt, wobei die hergestellten Formteile von der Bedienperson hinsichtlich einfach zu bestimmender Qualitätsmerkmale möglichst objektiv, zum Teil aber subjektiv zu beurteilen sind. Die Ergebnisse dieser Beurteilung werden jeweils in den Anfahrassistenten 15 eingegeben und von diesem zur weiteren Anpassung und Verbesserung der Maschineneinstellung herangezogen, bis schließlich Formteile von ausreichend guter Grundqualität erzielt werden.

Das entsprechende Einstellverfahren kann in mehrere Phasen oder Abschnitte unterteilt werden:

In einer ersten Phase erfolgt eine Vorgabe einiger wesentlicher Grundeinstellungen betreffend das verwendete Fom-Werkzeug 4 und den verwendeten Werkstoff anhand von Materialdaten, sowie eine Überprüfung wichtiger Rahmenbedingungen durch die Bedienperson.

In dieser Phase werden von der Bedienperson beispielsweise die Bezeichnung des verwendeten Kunststoff-Materials und/oder dessen Handelsname eingegeben, woraufhin aus einer hinterlegten Materialdatenbank die vom jeweiligen Hersteller empfohlenen Einstellbereiche der wichtigsten Verarbeitungsparameter bzw. die daraus resultierenden Prozessgrenzen automatisch in den Anfahrassistenten 15 importiert werden. Zu den wichtigsten Verarbeitungsparametern gehören unter anderem die Entformungstemperatur, die Werkzeugtemperatur, die Massetemperatur, d.h. die Temperatur der Kunststoffschmelze, und die Plastifiziergeschwindigkeit, d.h. die Drehzahl bzw. Umfangsgeschwindigkeit der Schneckenwelle 9. Die Höhe des Staudrucks zum Erzielen einer ausreichenden Schmelzehomogenität beim Plastifizieren richtet sich ebenfalls nach Empfehlungen des Werkstoffherstellers und ist weiters abhängig von der Bauform der Schneckenwelle 9. Soweit vorhanden, werden die im Regelfall als optimal geltenden Werte für die Verarbeitungsparameter voreingestellt oder ansonsten vom Anfahrassistenten 15 vorgeschlagen. Fehlen Herstellervorgaben oder sollen bewusst davon abweichende Werte verwendet werden, können diese durch die Bedienperson gegebenenfalls auch manuell verändert werden. Auch die Definition eines neuen Materials durch den Benutzer, sowie deren Hinterlegung in der Datenbank des Anfahrassistenten 15 ist möglich, um für künftige Verwendungen einfach abrufbar zu sein.

Die möglichen Einstellbereiche können vom Anfahrassistenten 15 in Abhängigkeit von den Eigenschaften der jeweiligen Spritzgießmaschine 1 auch beschränkt werden. Solche einschränkenden Maschineneigenschaften können beispielsweise der maximale Einspritzdruck oder die maximale Einspritzgeschwindigkeit sein.

Weiters sind einige wesentliche, charakteristische Daten zum verwendeten Form-Werkzeug 4 durch den Benutzer vorzugeben. Solche werkzeugspezifischen Eingaben sind beispielsweise die durchschnittliche und die maximale Wandstärke des zu produzierenden Formteils und/oder des Form-Werkzeuges 4 und gegebenenfalls weitere geometrische Daten des Formteils, sowie bestimmte Konfigurationen und Ausführungsformen des Form-Werkzeuges 4, wie zum Beispiel ob es sich um eine Ausführung mit einem so genannten Stangenanguss oder mit einem Heißkanal handelt.

Bevor mit dem halbautomatischen Einstellvorgang begonnen wird, prüft der Anfahrassistent 15 das Vorliegen einiger wesentlicher Rahmenbedingungen und Konfigurationen. Sofern eine automatische Überprüfung einzelner Kriterien technisch nicht möglich oder nicht implementiert ist, ist das Vorliegen dieser Bedingungen durch die Bedienperson zu überprüfen und das Ergebnis dieser Überprüfung in einer Eingabemaske des Anfahrassistenten 15, beispielsweise in Art einer Checkliste, einzugeben. Dadurch ist sichergestellt, dass wichtige und möglicherweise sicherheitsrelevante Kriterien nicht übersehen werden bzw. erfüllt sind. Solche Kriterien sind beispielsweise ein korrekt montiertes Form-Werkzeug 4, ein korrekt eingestellter Formschutz um das Form-Werkzeug 4 beim Schließen vor Beschädigung zu schützen, das Erreichen der korrekten Werkzeugtemperatur und/oder ein korrekt angeschlossenes Auswerferpaket. Je nach der zuvor angegebenen Konfiguration und Materialauswahl können auch noch weitere Kriterien zu überprüfen sein, wie etwa das Erreichen der Betriebstemperatur für den Heißkanal und eine unter Umständen durchgeführte Vortrocknung des verwendeten Kunststoff-Granulats, falls dieses im Hinblick auf Luftfeuchtigkeit empfindlich sein sollte.

Wurde das Vorliegen der erforderlichen Bedingungen automatisiert festgestellt und/oder durch die Bedienperson bestätigt, und sind darüber hinaus eventuell vorhandene Schutztüren und Sicherheitseinrichtungen an der Spritzgießmaschine 1 geschlossen bzw. aktiviert, wird nach einer gegebenenfalls zusätzlichen, bewussten Bestätigung durch die Bedienperson die nächste Phase des Einstellprozesses eingeleitet.

In der zweiten Phase werden eine Reihe von Maschinenoperationen bzw. probeweisen Fertigungszyklen oder Teilfertigungszyklen durchgeführt und die dabei ermittelten Prozessgrößen und die festgestellten Qualitätsmerkmale der entstehenden Formteile werden zur Bestimmung geeigneter Einstellwerte bzw. zur Bestimmung von zu optimierenden Einstellparametern für eine prozessfähige Ersteinstellung verwendet. Wesentlich ist dabei, dass mittels der Steuervorrichtung 14 bzw. unter Einbindung oder Anleitung des Anfahrassistenten 15 zumindest eine näherungsweise Bestimmung der Viskosität der plastifizierten Formmasse oder eine Bestimmung einer ähnlichen Kenngröße, welche die Fließeigenschaften des KunststoffMaterials, insbesondere der Kunststoffschmelze geeignet charakterisiert, erfolgt.

Entsprechend einer vorteilhaften Ausführungsform wird dabei von der Plastifiziereinheit 5 zunächst ein so genannter Leerschuss durchgeführt, d.h. es erfolgt ein Materialausstoß nur durch die Düse 7 der Spritzgießmaschine 1 in den freien Raum anstatt in das Form-Werkzeug 4. Dabei werden die Plastifiziergeschwindigkeit, d.h. der Volumenstrom V und der dabei an der Düse entstehende Druck bzw. Druckabfall bestimmt und über die bekannte Geometrie der Düse 7 wird die Viskosität der Schmelze zumindest näherungsweise berechnet. Bei diesem Schmelze-Ausstoß wird vorzugsweise dieselbe Temperatur der Schmelze und dieselbe Einspritzgeschwindigkeit regelungstechnisch vorgegeben, die auch als Ausgangswerte für die nachfolgenden probeweisen Fertigungszyklen mit einem entsprechend angelegten FormWerkzeug 4 vorgesehen sind. Die Festlegung des Ausgangswertes für die Einspritzgeschwindigkeit erfolgt vorzugsweise in Abhängigkeit der mittleren Wandstärke des Formteils oder des Verhältnisses von Fließlänge zu Wandstärke des Formteils, sofern dieses bekannt ist.

Die dabei an der Düse 7 auftretende Druckdifferenz $\Delta p$ wird ermittelt bzw. wird der Schmelzendruck $p_S$ in der Düsenvorkammer 11 gemessen, oder ausgehend von einer auf die Schneckenwelle 9 wirkenden Kraft, insbesondere über den Hydraulikdruck, rechnerisch ermittelt. Gegebenenfalls wird dieser Wert um den äußeren Umgebungsdruck $p_A$ korrigiert, obwohl der Umgebungsdruck $p_A$ auch vernachlässigt werden kann. Diese Druckdifferenz $\Delta p$ wird dann zur Berechnung der Viskosität $\eta$ gemäß der nachfolgenden Formel herangezogen:

$$\eta = \frac{k \cdot \Delta p \cdot e_0}{\dot{V}}$$

Wobei die jeweiligen Formelzeichen für folgende Parameter bzw. physikalische Größen stehen:

$\eta$.... Viskosität (Pa * s bzw. mPas)
$\Delta p$... Druckabfall bzw. benötigter Druck (Pa)
$e_0$ ... 0,815 (Konstant)

$V$ ... Volumenstrom (mm$^3$/s)
$k$ ... Düsenleitwert (mm$^3$)

Der Druckabfall an der Düse 7 ist wie folgt ermittelbar:

$$\Delta p = p_S - p_A$$

Wobei die jeweiligen Formelzeichen für folgende Parameter bzw. physikalische Größen stehen:

$p_S$ ... Druck der viskosen Masse in der Schnecken- bzw. Düsenvorkammer (Pa)
$p_A$ ... äußerer Umgebungsdruck (Pa)

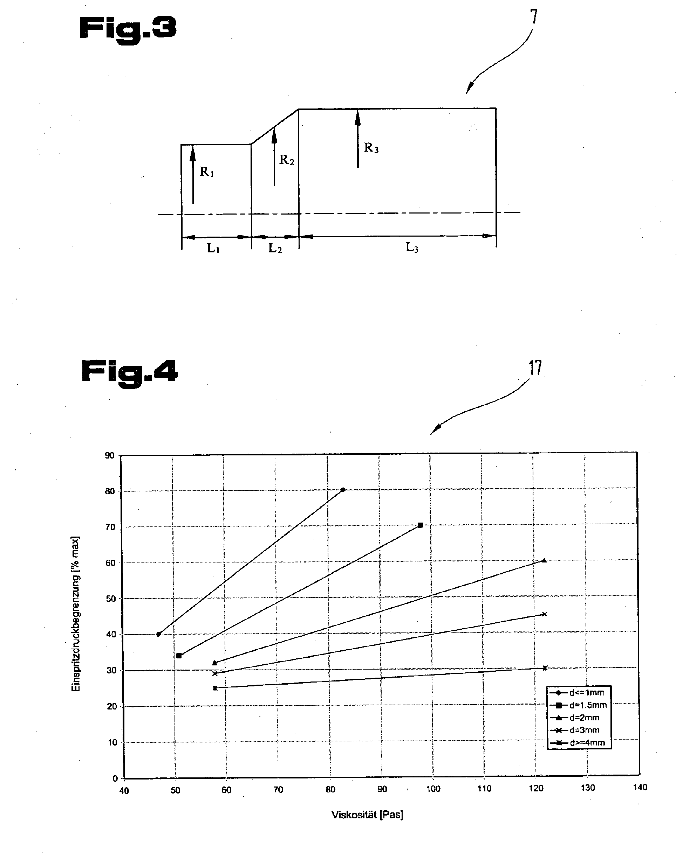

Der zur Berechnung der Viskosität $\eta$ weiters benötigte Düsenleitwert k ist in Bezug auf die beispielhafte Düsengeometrie mit rundem Querschnitt entsprechend der Darstellung in Fig. 3 wie folgt berechenbar:

$$k = 1/(\frac{8 \cdot L_1}{\pi \cdot R_1^{\,4}} + \frac{8 \cdot L_2}{\pi \cdot R_2^{\,4}} + \frac{8 \cdot L_3}{\pi \cdot R_3^{\,4}})$$

Der Volumenstrom V ist über die Plastifiziergeschwindigkeit $v_s$ wie folgt ermittelbar:

$$\dot{V} = \frac{v_s \cdot D^2 \cdot \pi}{4}$$

Die jeweiligen Formelzeichen stehen für folgende Parameter bzw. physikalische Größen: $v_s$... Plastifiziergeschwindigkeit bzw. Vorschubgeschwindigkeit der Schneckenwelle D ... Durchmesser der Schneckenwelle

Aus der ermittelten Viskosität $\eta$ und der mittleren Wandstärke d des Formteils als weiterer Parameter, wird nun aus einem Diagramm 17, wie es in Fig. 4 beispielhaft veranschaulicht wurde, insbesondere aus einer entsprechenden Daten- bzw. Parametermatrix, d.h. einer Tabelle, ein geeigneter Ausgangswert für den Einspritzdruck ermittelt, welcher für die nachfolgende Phase zur Bestimmung des Formteilvolumens verwendet wird. In dieser Tabelle, in welcher in einfacher Form üblicherweise praktikable Erfahrungswerte abgebildet sind, kann dabei durch Interpolation der jeweilige Einspritzdruck zumindest näherungsweise ermittelt werden. Je nach Art der Spritzgießmaschine 1 kann der Einspritzdruck bzw. die einzustellende Druckbegrenzung als Absolutdruck oder auch als Prozentwert bezogen auf den zulässigen Maximaldruck der Spritzgießmaschine 1 angegeben sein.

Das Diagramm 17 gemäß Fig. 4 stellt zur Veranschaulichung den Inhalt einer solchen Tabelle qualitativ dar. In dieser Tabelle sind für verschiedene mittlere Wandstärken d des Formteiles die jeweils einzustellenden Anfangswerte für den Einspritzdruck bzw. für die Druckbegrenzung in Prozent des maximal zulässigen bzw. maximal möglichen Einspritzdruckes der Spritzgießmaschine 1 in Abhängigkeit von der ermittelten Viskosität $\eta$ der Kunststoffschmelze eingetragen. Diese Werte für den Einspritzdruck basieren auf Erfahrungswerten bzw. werden diese Abhängigkeiten bevorzugt experimentell ermittelt.

Die Werte im Diagramm 17 bzw. aus der entsprechenden, datentechnischen Tabelle fließen also in den Anfahrassistenten 15 bzw. in die Betriebsweise der Steuervorrichtung 14 ein, um so einen geeigneten Arbeitspunkt, insbesondere Einspritzdruck zu eruieren. Dieses Diagramm 17 ist dabei als absolut beispielhaft und teilweise verzerrt anzusehen.

Ab nun werden mehrere Maschinenoperationen bzw. probeweise Fertigungszyklen mit jeweils an die Plastifiziereinheit 5 angelegtem Form-Werkzeug 4 ausgeführt. Dabei erfolgen eine vorläufige Bestimmung des erforderlichen Dosierweges an der Plastifiziereinheit 5 und eine vorläufige Festlegung des späteren Umschaltpunktes vom geschwindigkeitsgeregelten Einspritzvorgang auf die druckgeregeite Nachdruckphase.

Zu Beginn dieser Operation wird die Plastifiziereinheit 5 bzw. deren Schneckenwelle 9 auf in etwa 95% des maximal möglichen Dosierweges aufdosiert. Dabei wird Kunststoffgranulat vom Vorratsbehälter 6 durch die beheizte Schneckenwelle 9 plastifiziert und in den Abschnitt zwischen Schneckenwelle 9 und Düse 7, d.h. in die Düsenvorkammer 11 transportiert, wobei die Schneckenwelle 9 durch das nach vorne transportierte Material gleichzeitig nach hinten geschoben wird. Der axiale Antrieb, insbesondere die Schiebehydraulik der Schneckenwelle 9 setzt dem Zurückweichen der Schneckenwelle 9 einen gewissen Widerstand entgegen und sorgt so für einen gewissen Staudruck in der Düsenvorkammer 11. Die Position der Schneckenwelle 9 wird während des Aufdosierens von der Steuervorrichtung 14 überwacht. Beim Erreichen von vorzugsweise ca. 95% des maximalen Hubes und damit auch 95% des maximal möglichen Dosiervolumens wird der Dosiervorgang beendet, d.h. die Drehbewegung der Schneckenwelle 9 wird gestoppt. Die Rotationsgeschwindigkeit der Schneckenwelle 9 orientiert sich in der Regel an Angaben des Materialherstellers.

Anschließend erfolgt ein ausschließlich druckgeregelter oder druckbegrenzter Einspritzvorgang in das Form-Werkzeug 4. Die Höhe des verwendeten Einspritzdruckes wird regelungstechnisch in Abhängigkeit von der zuvor ermittelten Viskosität $\eta$ der Masse und der minimalen Wandstärke des Formteiles festgelegt. Die ausschließliche Druckregelung während des probeweisen Einspritzvorganges stellt sicher, dass das Form-Werkzeug 4 trotz unbekanntem Volumen nicht "überspritzt" wird, d.h. dass keine Grate entstehen bzw. dass das Form-Werkzeug 4 durch Druckspitzen nicht beschädigt wird. Die Festlegung des Einspritzdruckes in Abhängigkeit von der zuvor ermittelten Viskosität $\eta$ der plastifizierten Kunststoff-Masse stellt außerdem sicher, dass das Form-Werkzeug 4 möglichst vollständig gefüllt wird und das dabei zu ermittelnde Aufnahmevolumen des Form-Werkzeuges 4 möglichst genau bestimmt wird, ohne jedoch das Form-Werkzeug 4 bei dieser Ermittlung des Aufnahmevolumens zu überspritzen.

Via die Steuervorrichtung 14 wird das Ende der Vorwärtsbewegung der Schneckenwelle 9 detektiert. Dies kann z.B. über eine Geschwindigkeitsgradienten-Methode erfolgen. Am Ende der Vorwärtsbewegung ist eine zumindest weitgehende Füllung des Form-Werkzeuges 4 erreicht und der Anfahrassistent 15 bestimmt aus dem in axialer Richtung zurückgelegten Weg der Schneckenwelle 9 den vorläufigen Dosierweg. Weiters legt der Anfahrassistent 15 den vorläufigen Umschaltpunkt für die Nachdruckphase als Ausgangspunkt für die nachfolgenden probeweisen Fertigungszyklen fest. Weitere Details und Varianten zu diesem Schritt sind der einleitend genannten Studienarbeit entnehmbar.

Nach den vorhergehend beschriebenen Ermittlungen folgen mehrere probeweise Fertigungszyklen bzw. Spritzversuche, wobei der Einspritzvorgang in herkömmlicher Weise geschwindigkeitsgeregelt durchgeführt wird, aber im Gegensatz zu einem regulären Fertigungszyklus während der Kühlzeit der Formmasse noch keine Beaufschlagung mit Nachdruck erfolgt. In üblicherweise mehreren Zyklen werden Probeteile gefertigt und anschließend geprüft. Erforderlichenfalls wird anschließend durch Anpassung von Prozessparametern versucht, den Füllgrad des Form-Werkzeuges 4 bzw. die Form der gefertigten Formteile schrittweise zu verbessern sowie gegebenenfalls die Lage bzw. das Umschaltkriterium für eine Umschaltung auf Nachdruck zu korrigieren.

Gelingt es, das Form-Werkzeug 4 mit den gewählten Parametern auf mindestens 95% zu füllen und wird dabei auch der eingestellte Grenzdruck nicht überschritten, so wird in die nächste Phase gewechselt, in welcher via den Anfahrassistenten 15 die geeignete Höhe des Nachdrucks ermittelt wird.

Falls die Formfüllung nach Begutachtung durch die Bedienperson als nicht ausreichend befunden wurde, versucht der Anfahrassistent 15 eine schrittweise Anpassung der nachfolgend angeführten Prozessparameter innerhalb der durch Spritzgießmaschine 1, das Form-Werkzeug 4 und den Werkstoff vorgegebenen Prozessgrenzen:

Erhöhung der Einspritzdruckbegrenzung bzw. des Einspritzdruckes
Erhöhung der Einspritzgeschwindigkeit
Erhöhung der Massetemperatur
Erhöhung der Werkzeugtemperatur.

Die Anpassung der obigen Parameter erfolgt dabei in einer Reihenfolge bzw. mit einer Priorität, in der die Parameter gelistet sind.

Die Schrittweite der vorgenommenen Änderungen ist vorzugsweise durch einen bestimmten Prozentsatz der Spanne zwischen den möglichen bzw. den empfohlenen Prozessgrenzen festgelegt. Insbesondere kann die Änderung des Wertes des jeweiligen Parameters ein definierter, maximaler Prozentsatz sein. Demnach kann eine Werteänderung mit z.B. 20% der Spanne zwischen den herstellerseitig angegebenen Grenzwerten von minimaler und maximaler Massetemperatur definiert sein. Bei mehrfacher Anpassung eines Parameters in mehreren aufeinander folgenden Probezyklen können aber ebenso auch unterschiedlich große Schrittweiten vorgesehen sein. Insbesondere kann die Schrittweite der Anpassung auch vom Abstand des Parameterwertes zu einem vorgegebenen Grenzwert abhängig gewählt sein.

Wird nach einer gewissen Anzahl von probeweisen Fertigungszyklen kein ausreichender Füllgrad erreicht oder keine Verbesserung mehr erzielt, wird das Einstellverfahren mit einem Fehlerhinweis des Anfahrassistenten 15 abgebrochen. Weitere Details und Varianten zu dieser Phase sind der bereits genannten Studienarbeit entnehmbar.

Nach erfolgreicher Durchführung von wie oben beschriebenen, probeweisen Fertigungszyklen wird zumindest ein vollständiger Fertigungszyklus mit den zuvor ermittelten Prozessparametem samt Beaufschlagung mit Nachdruck durchgeführt. D.h., dass am Ende des Einspritzvorganges und während dem Abkühlvorgang, in welchem auch eine Materialschrumpfung stattfindet, der viskose Werkstoff weiterhin mit einem gewissen Druck in das Form-Werkzeug 4 gepresst bzw. nachgefördert wird, bis das Material im Angusskanal des Form-Werkzeuges 4 schließlich erstarrt. Die Höhe des zunächst gewählten Nachdrucks sowie die technisch möglichen und empfohlenen Grenzen erfolgen anhand von Angaben des Herstellers der Spritzgießmaschine 1 und/oder des Werkstoffes.

Die erforderliche Nachdruckzeit wird durch jene Zeit bestimmt, bis zu der das Material im Angusskanal ausreichend erstarrt ist und diesen damit verschließt. Diese Zeit lässt sich näherungsweise aus der so genannten "Kühlzeitgleichung" bestimmen:

$$ t_N = \frac{s^2}{\pi^2 \cdot a_{eff}} \cdot \ln\left( \frac{4}{\pi} \cdot \frac{T_M - T_W}{T_e - T_W} \right) $$

$t_N$     Nachdruckzeit in s

$S$     Wanddicke im Bereich des Angusses

$a_{eff}$     effektive Temperaturleitfähigkeit (des Materials) in mm$^2$/s

$T_M$     Massetemperatur in °C

$T_W$     Werkzeugtemperatur in °C

$T_e$     maximale Entformungstemperatur

Ist das gefertigte Formteil nach Begutachtung durch die Bedienperson vollständig gefüllt bzw. hinsichtlich seiner gewünschten Form komplett und weist es keine oder nur marginale Grate oder Einfallstellen und keinen maßgeblichen Verzug auf und weist auch die Oberfläche des Formteils ausreichende Qualität auf, wechselt der Anfahrassistent 15 zur nächsten und abschließenden Phase.

Wird die Qualität des jeweils zuletzt gefertigten Teils als nicht ausreichend befunden, erfolgt eine schrittweise Erhöhung des Nachdrucks samt nachfolgender Durchführung eines weiteren Fertigungszyklus. Wird keine Verbesserung der Qualität mehr festgestellt oder eine gewisse Maximalanzahl von Fertigungszyklen überschritten, bricht der Anfahrassistent 15 das Verfahren mit einer Fehlermeldung ab.

In der abschließenden Phase des Einstellverfahrens erfolgt nur noch eine Anpassung des Massepolsters, d.h. jener Materialmenge, welche am Ende eines Spritzzyklus in der Düsenvorkammer 11 bzw. im Schneckenvorraum verbleibt. Dazu werden die Position der axialen Endlage der Schneckenwelle 9 nach dem Aufdosieren sowie die Lage des Umschaltpunktes bzw. die Umschaltbedingung auf Nachdruck derart verschoben, dass am Ende des Spritzzyklus ein Massepolster von etwa 10% des Dosierweges in der Düsenvorkammer 11 verbleibt.

Zur Kontrolle wird abschließend ein Fertigungszyklus mit dem finalen Satz von Fertigungsparametern durchgeführt, der Parametersatz für den nachfolgenden Fertigungsprozess in der Steuervorrichtung 14 der Spritzgießmaschine 1 gespeichert und der Anfahrassistent 15 ordnungsgemäß beendet.

Entsprechend einer vorteilhaften Ausführungsform werden die Eingaben und Bedienhandlungen der Bedienperson, die verwendeten Parameter zur Durchführung der probeweisen Fertigungszyklen und die dabei ermittelten Prozessgrößen in einem Protokoll gespeichert. Unabhängig davon kann es zweckmäßig sein, vor dem Start des Einstellverfahrens eine Identität und/oder Berechtigung der Bedienperson zu erfassen und das Einstellverfahren mittels des Anfahrassistenten 15 nur bei entsprechend festgestellter Berechtigung auszuführen.

Ferner kann die Eingabe der Informationen durch den Benutzer betreffend Kunststoff-Material, Form-Werkzeug 4 und/oder Spritzgießmaschine 1 das elektronische Erfassen oder Auslesen maschinenlesbarer Datenträger, insbesondere von Barcodes oder Transpondern, umfassen. Zweckmäßig ist es auch, wenn das Einstellverfahren an zumindest einem Punkt durch ein Kommando des Bedieners abgebrochen und der Einstell- bzw. Anfahrassistent 15 vorzeitig beendet werden kann.

Entsprechend einer weiteren Ausführungsform kann der Anfahrassistent 15 durch ein Kommando einer Bedienperson vorzeitig beendet werden, wobei vom Anfahrassistenten 15 jene Teilprozesse noch abgeschlossen oder ausgeführt werden, oder vom Anfahrassistenten 15 jene Zustände noch hergestellt werden, durch welche eine beschädigungsfreie Stillsetzung und eine problemlose Wiederinbetriebnahme der Spritzgießmaschine 1 sichergestellt wird.

Eine effektvolle Maßnahme liegt weiters darin, die Anzahl der in der Versuchsphase durchgeführten Fertigungszyklen fortlaufend zu erfassen und beim Überschreiten einer vorgegebenen maximalen Anzahl von Versuchsphasen ohne Erreichung einer zufriedenstellenden Fertigungsqualität das Einstellverfahren automatisch abzubrechen und via den Anfahrassistenten 15 eine Fehlermeldung auszugeben. Ferner ist es zweckmäßig, bereits bestehende bzw. zuvor eingestellte Prozessparameter via den Anfahrassistenten 15 zu speichern und bei einem vorzeitigen Abbruch des Einstellverfahrens die gespeicherten Prozessparameter wieder herzustellen.

Eine praktikable Maßnahme liegt auch darin, wenn der Anfahrassistent 15 bei der Ermittlung geeigneter Einstellparameter und Prozessgrenzen auf eine Materialdatenbank zugreift und in Abhängigkeit von einer durch die Bedienperson eingegebenen Materialbezeichnung oder Datensatzkennung eine oder mehrere der folgenden Größen ausliest und für das Einstellverfahren verwendet: die minimale und maximale Massetemperatur; die minimale und maximale Werkzeugtemperatur; die maximale Entformungstemperatur; und die Temperaturleitfähigkeit des Kunststoff-Materials.

Die Ausführungsbeispiele zeigen mögliche Ausführungsvarianten des Einstellverfahrens bzw. des Anfahrassistenten 15, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst.

Die den eigenständigen erfinderischen Lösungen zugrunde liegende Aufgabe kann der Beschreibung entnommen werden.

**Bezugszeichenaufstellung**

1    Spritzgießmaschine
2    Maschinenbett
3    Schließeinheit
4    Form-Werkzeug
5    Plastifiziereinheit

6    Vorratsbehälter
7    Düse
8    Hohlzylinder
9    Schneckenwelle
10   Heizung

11   Düsenvorkammer
12   Erfassungsabschnitt
13   Rückflusssperre
14   Steuervorrichtung
15   Anfahrassistent

16   Ein- und Ausgabemittel
17   Diagramm

**Patentansprüche**

1. Einstellverfahren zum teilautomatischen Herstellen einer prozessfähigen Grundeinstellung für eine Spritzgießmaschine (1) zur Verarbeitung von Formmassen aus Kunststoff, umfassend eine steuerungstechnisch unterstützte Ermittlung geeigneter Einstellparameter mit tels einem in einer Steuervorrichtung (14) der Spritzgießmaschine (1) softwaretechnisch integrierten, interaktiven Anfahrassistenten (15), welcher Anfahrassistent (15) eine Bedienperson der Spritzgießmaschine (1) schrittweise zumindest durch Teilabschnitte des Einstellprozesses leitet, indem mittels eines Bedienerinterfaces der Steuervorrichtung (14) systemrelevante Anweisungen und Informationen zwischen dem Anfahrassistenten (15) und einer Bedienperson ausgetauscht werden, wobei der Einstellprozess zumindest folgende Phasen umfasst:

A1.) Eingabe von Basisinformationen über das verwendete Kunststoff-Material, das verwendete Form-Werkzeug (4), die verwendete Spritzgießmaschine (1) und/oder von sonstigen vorgegebenen oder gewünschten Maschinenkonfigurationen, Prozessbedingungen oder Prozessgrenzen durch eine Bedienperson;

A2.) Starten einer Versuchsphase (V) in welcher mehrere vollständig oder wenigstens teilweise durchgeführte Fertigungszyklen mit unterschiedlichen Prozessparametern ausgeführt werden und die dabei auftretenden Prozesskenngrößen automatisiert oder durch Interaktion mit einem Bediener ermittelt werden, indem eine Erfüllung bestimmter Prüfkriterien für die gefertigten Formteile von einer Bedienperson festgestellt und das jeweilige Ergebnis in den Anfahrassistenten (15) eingegeben wird,

und wobei eine automatisierte Ermittlung eines Satzes geeigneter Einstellparameter und Prozessgrenzen anhand von

B1.) den durch eine Bedienperson eingegebenen Basisinformationen,

B2.) von im Anfahrassistenten (15) softwaretechnisch und/oder datenbanktechnisch abgebildeten Regeln und Erfahrungswerten zur Auswahl geeigneter Einstellparameter, sowie anhand von

B3.) den in der Versuchsphase (V) ermittelten Prozesskenngrößen und den festgestellten Überprüfungsergebnissen, vorgenommen wird, **dadurch gekennzeichnet, dass**

vor dem Starten der Versuchsphase (V)

C1.) jene Prozessbedingungen, welche wesentlichen Einfluss auf die Fließeigenschaften der Formmasse haben, insbesondere die Einspritzgeschwindigkeit und die Massetemperatur, vorläufig festgelegt werden,

C2.) eine Kenngröße für das jeweilige Fließverhalten, insbesondere eine Viskosität der verwendeten Formmasse unter diesen vorläufig festgelegten Prozessbedingungen vom Anfahrassistenten (15) zumindest näherungsweise ermittelt wird, wobei für diese Ermittlung der Kenngröße für das Fließverhalten der verwendeten Formmasse ein freier Ausspritzvorgang ohne angesetztem Form-Werkzeug (4) nur durch die Düse ins Freie durchgeführt wird,

C3.) und diese Kenngröße für das Fließverhalten der Formmasse und gegebenenfalls weitere, ermittelte oder vorgegebene Prozesskenngrößen zum Festlegen eines probeweisen, vorläufigen Einstellwertes für den Sollwert und/oder den oberen Grenzwert des Einspritzdruckes für die nachfolgend zu startende Versuchsphase (V) verwendet wird.

2. Verfahren nach Anspruch 1, **dadurch gekennzeichnet, dass** der Ausspritzvorgang mit einer vorbestimmten Ausstoß- bzw. Fließgeschwindigkeit und/oder mit einem vorbestimmten Massedurchfluss durch eine den Übergang zum Form-Werkzeug (4) bildende Düse (7) einer Plastifiziereinheit (5) der Spritzgießmaschine (1) und bei einer vorbestimmten Temperatur der Formmasse und/oder der Plastifiziereinheit (5) erfolgt und der dabei an der Düse (7) auftretende Druck oder Druckabfall direkt oder indirekt ermittelt, insbesondere an der Hydraulik für eine Schneckenwelle (9) der Plastifiziereinheit (5) gemessen wird.

3. Verfahren nach Anspruch 2, **dadurch gekennzeichnet, dass** aus der Ausstoß- bzw. Fließgeschwindigkeit, dem ermittelten Druckabfall und den jeweiligen Geometriedaten der Düse (7) die Viskosität oder eine dazu äquivalente Kenngröße für das Fließverhalten der plastifizierten Formmasse vom Anfahrassistenten (15) zumindest näherungsweise rechnerisch ermittelt wird.

4. Verfahren nach Anspruch 2, **dadurch gekennzeichnet, dass** der Druck in einer Düsenvorkammer (1l) der Plastifiziereinheit (5) während des Ausstoßes von Formmasse mehrmals ermittelt bzw. gemessen wird und für die Ermittlung des Fließverhaltens, insbesondere der Viskosität der Formmasse der Maximalwert aus mehreren Einzelmessungen oder mehreren Einzelberechnungen herangezogen wird.

5. Verfahren nach Anspruch 1, **dadurch gekennzeichnet, dass** für die Ermittlung der Kenngröße für das Fließverhalten der verwendeten Formmasse eine der verwendeten Formmasse zugeordnete Tabelle mit Erfahrungswerten oder Vorgaben des Werkstoffherstellers oder eine Näherungsformel verwendet wird, aus welcher in Abhängigkeit zumindest von der Ausstoß- bzw. Fließgeschwindigkeit und der Temperatur der Formmasse wenigstens ein Näherungswert fur die Kenngröße des Fließverhaltens der Formmasse ermittelt wird.

6. Verfahren nach einem der vorhergehenden Ansprüche, **dadurch gekennzeichnet, dass** die Kenngröße für das Fließverhalten der Formmasse und eine mittlere Wandstärke des zu produzierenden Formteils als Eingangsgrößen für eine Tabelle oder eine Näherungsformel zur Bestimmung eines anfänglichen Startwertes für den oberen Grenzwert des Einspritzdruckes herangezogen werden.

7. Verfahren nach einem der vorhergehenden Ansprüche, **dadurch gekennzeichnet, dass** die Versuchsphase (V) zumindest in folgende Phasen unterteilt ist:

D1.) zumindest näherungsweise Ermittlung des Volumens des Hohlraumes im Form-Werkzeug (4) durch einen druckgeregelten oder druckbegrenzten Einspritzvorgang von Formmasse und anschließende, vorläufige Festlegung des Umschaltpunktes auf eine Nachdruckphase für die Formmasse sowie Ermittlung des Dosiervolumens anhand der in das Form-Werkzeug (4) gespritzten Formmasse und anhand des von der Bedienperson festgestellten Füllgrades des Form-Werkzeuges (4);

D2.) ein- oder mehrmalige Durchführung von probeweisen Fertigungszyklen jeweils ohne Nachdruckphase, wobei nachfolgend in Abhängigkeit vom jeweils erzielten bzw. festgestellten Füllgrad des Form-Werkzeuges einer oder mehrere der Parameter umfassend Einspritzdruckbegrenzung, Einspritzgeschwindigkeit, Umschaltpunktbedingung auf Nachdruckphase, Temperatur der Formmasse und/oder des Form-Werkzeuges mit dem Ziel der Erhöhung des Füllgrades des Form-Werkzeuges (4) angepasst werden;

D3.) ein- oder mehrmalige Durchführung von probeweisen Fertigungszyklen jeweils unter Anwendung von Nachdruck, wobei nachfolgend in Abhängigkeit von der jeweils erzielten bzw. festgestellten Qualität, insbesondere der Oberflächengüte des produzierten Formteiles, die Höhe des Nachdruckes mit dem Ziel der Verbesserung der Oberflächengüte angepasst wird.

8. Verfahren nach einem der vorhergehenden Ansprüche, **dadurch gekennzeichnet, dass** die Eingaben und Bedienhandlungen der Bedienperson, die verwendeten Parameter zur Durchführung der probeweisen Fertigungszyklen und die dabei ermittelten Prozessgrößen in einem Protokoll gespeichert werden.

9. Verfahren nach einem der vorhergehenden Ansprüche, **dadurch gekennzeichnet, dass** vor dem Start des Einstellverfahrens eine Identität und/oder Berechtigung der Bedienperson erfasst wird und das Einstellverfahren nur bei entsprechend festgestellter Berechtigung ausführbar ist.

10. Verfahren nach einem der vorhergehenden Ansprüche, **dadurch gekennzeichnet, dass** die Eingabe der Informationen durch den Benutzer betreffend Kunststoff-Material, Form-Werkzeug (4) und/oder Spritzgießmaschine (1) das elektronische Erfassen oder Auslesen maschinenlesbarer Datenträger, insbesondere von Barcodes oder Transpondern, umfasst.

11. Verfahren nach einem der vorhergehenden Ansprüche, **dadurch gekennzeichnet, dass** das Einstellverfahren an zumindest einem Punkt durch ein Kommando des Bedieners abgebrochen und der Anfahrassistent (15) vorzeitig beendet werden kann.

12. Verfahren nach einem der vorhergehenden Ansprüche, **dadurch gekennzeichnet, dass** der Anfahrassistent (15) durch ein Kommando einer Bedienperson vorzeitig beendet werden kann, wobei vom Anfahrassistenten (15) jene Teilprozesse noch abgeschlossen oder ausgeführt werden, oder vom Anfahrassistenten (15) jene Zustände noch hergestellt werden, durch welche eine beschädigungsfreie Stillsetzung und eine problemlose Wiederinbetriebnahme der Spritzgießmaschine (1) sichergestellt wird.

13. Verfahren nach einem der vorhergehenden Ansprüche, **dadurch gekennzeichnet, dass** die Anzahl der in der Versuchsphase (V) durchgeführten Fertigungszyklen fortlaufend erfasst und beim Überschreiten einer vorgegebenen maximalen Anzahl von Versuchsphasen (V) ohne Erreichung einer zufriedenstellenden Fertigungsqualität das Einstellverfahren automatisch abgebrochen und eine Fehlermeldung ausgegeben wird.

14. Verfahren nach einem der vorhergehenden Ansprüche, **dadurch gekennzeichnet, dass** beim Aufruf des Anfahrassistenten (15) die vorbestehend eingestellten Prozessparameter gespeichert und bei einem vorzeitigen Abbruch des Einstellverfahrens die gespeicherten Prozessparameter wiederhergestellt werden.

15. Verfahren nach einem der vorhergehenden Ansprüche, **dadurch gekennzeichnet, dass** der Anfahrassistent (15) bei der Ermittlung geeigneter Einstellparameter und Prozessgrenzen auf eine Materialdatenbank zugreift und in Abhängigkeit von einer durch die Bedienperson eingegebenen Materialbezeichnung oder Datensatzkennung eine oder mehrere der folgenden Größen ausliest und für das Einstellverfahren verwendet:

- die minimale und maximale Massetemperatur,
- die minimale und maximale Werkzeugtemperatur;
- die maximale Entformungstemperatur;
- die Temperaturleitfähigkeit des Materials.

## Claims

1. Setting method for the semi-automatic production of a process-capable basic setting for an injection molding machine (1) for processing molding compounds made of plastic, comprising a control-supported determination of appropriate setting parameters by means of an interactive start-up assistant (15) that is integrated in a control apparatus (14) of the injection molding machine (1) by way of software, which start-up assistant (15) guides an operator of the injection molding machine (1) in steps at least through partial sections of the setting process by a user interface of the control apparatus (14) exchanging system-relevant instructions and information between the start-up assistant (15) and an operator, wherein the setting process comprises at least of the following phases:

   A1.) Entering basis information regarding the plastics material used, the molding tool (4) used, the injection molding machine (1) used and/or of any other pre-defined or desired machine configurations, process conditions or process limits by an operator;
   A2.) Starting a test phase (V) wherein several production cycles are carried out completely or at least partially at different process parameters and the process characteristics thereby occurring are automated or determined through interaction with an operator, by an operator determining whether certain check criteria for the molded parts are met and centering the respective result into the start-up assistant (15), and wherein an automated determination of a set of suitable setting parameters and process limits is carried out on the basis of
   B1.) the basis information entered by an operator
   B2.) rules or experiences for selecting suitable setting parameters imaged by the start-up assistant (15) by way of software and/or databases, as well as on the basis of B3.) the process characteristics determined and check results detected in the test phase (V),
   **characterized in that**
   prior to starting the test phase (V)
   C1.) those process conditions, which significantly influence the flow characteristics of the molding compound, in particular the injection speed and the melt temperature, are defined on a preliminary basis,
   C2.) a characteristic for the respective flow behavior, in particular a viscosity of the molding compound that is used under said preliminarily established process conditions, is at least approximately determined by the start-up assistant (15), wherein a free injection process with no molding tool (4) applied and is carried out only into the open air through the nozzle for determining this characteristic for the flow behavior of the molding compound used;
   C3.) and this characteristic for the flow behavior of the molding compound and optionally further pre-defined process characteristics which have been determined or specified, is used to establish a provisional, preliminary setting for the target value and/or for the upper threshold value of the injection pressure for the test phase (V) to be started thereafter.

2. Method according to claim 1, **characterized in that** the injection process is carried out at a pre-defined output speed or flow speed and/or at a pre-defined mass flow through a nozzle (7) forming the upper path to the molding tool (4) of a plasticizing unit (5) of the injection molding machine (1) and at a pre-defined temperature of the molding compound and/or the plasticizing unit (5) and the pressure or pressure drop thereby occurring at the nozzle (7) is determined directly or indirectly, in particular measured at the hydraulics for a worm shaft (9) of the plasticizing unit (5).

3. Method according to claim 2, **characterized in that** the start-up assistant (15) at least approximately calculates the viscosity or a thereto equivalent characteristic for the flow behavior of the plasticized molding compound on the basis of the output speed or the flow speed, the determined pressure drop and the respective geometric data of the nozzle (7).

4. Method according to claim 2, **characterized in that** the pressure in a nozzle fore chamber (11) of the plasticizing unit (5) is determined or measured several times while molding compound is being ejected and the maximum value of several individual measurements or several individual calculations is used for determining the flow behavior, in particular the viscosity of the molding compound.

5. Method according to claim 1, **characterized in that** for determining the characteristic for the flow behavior of the molding compound used a table provided by the material manufacturer which contains empirical values or specifications assigned to the molding compound used or an approximation formula is used, on the basis of which at least an approximate value for the characteristic of the flow behavior of the molding compound is determined as a function of at least the output speed or the flow speed and the temperature of the molding compound.

6. Method according to one of the preceding claims, **characterized in that** the characteristic for the flow behavior of the molding compound and a medium wall thickness of the molding part to be produced are used as basic values for a table or an approximation formula for determining an initial value for the upper threshold of an injection pressure.

7. Method according to one of the preceding claims, **characterized in that** the test phase (V) is divided into at least the following phases:

D1.) at least approximately determining the volume of the cavity in the molding tool (4) by a an injection process which is controlled and limited in terms of pressure and subsequently, preliminary defining the switchover point for a holding-pressure phase for the molding compound and determining the dosage volume on the basis of the molding compound injected into the molding tool (4) and on the basis of the filling level of the molding tool (4) detected by the operator;

D2.) carrying out production cycles once or several times on a trial basis, in each case with no holding-pressure phase; and subsequently, as a function of the respectively achieved or detected filling level of the molding tool one or more of the parameters comprising limitation of injection pressure, injection speed, condition for the switchover point to holding-pressure phase, temperature of the molding compound and/or the molding tool are adjusted in order to achieve that the filling level of the molding tool (4) is increased.

D3.) carrying out production cycles once or several times on a trial basis, in each case under application of holding pressure, and subsequently, as a function of the respectively achieved or determined quality, in particular the surface quality of the produced molding part, the level of the pressure is increased in order to achieve that the surface quality is improved.

8. Method according to one of the preceding claims, **characterized in that** the entries and operational actions of the operator, the parameters used for carrying out the production cycles on a trial basis and the thereby determined process characteristics are saved in a log.

9. Method according to one of the preceding claims, **characterized in that** prior to the beginning of the setting method an identity and/or authorization of the operator is recorded and the setting method can only be carried out when a corresponding authorization has been verified.

10. Method according to one of the preceding claims, **characterized in that** the information relating to plastics material, molding tool (4) and/or injection molding machine (1) entered by the operator comprise the electronic recording or reading of machine-readable data carriers, in particular barcodes or transponders.

11. Method according to one of the preceding claims, **characterized in that** the setting method can be cancelled by an operator's command at at least one point and the start-up assistant (15) can be terminated prematurely.

12. Method according to one of the preceding claims, **characterized in that** the start-up assistant (15) can be terminated prematurely by an operator's command, in which case those sub-processes will still be completed or carried out by the start-up assistant (15), or those states will still be provided by the start-up assistant (15) which sub-processes or states ensure a damage-free shutdown and problem-free restart of the injection molding machine (1).

13. Method according to one of the preceding claims, **characterized in that** the number of the production cycles carried out during the test phase (V) are continuously recorded and when a predefined maximum number of test phases (V) is exceeded with no satisfactory production quality having been achieved the setting method is cancelled automatically and an error message is issued.

14. Method according to one of the preceding claims, **characterized in that** when the start-up assistant (15) is called up the preexisting set process parameters are saved and the saved process parameters are restored when the setting method is terminated prematurely.

15. Method according to one of the preceding claims, **characterized in that** the start-up assistant (15) when determining suitable setting parameters accesses a material database and, depending on the material designation or dataset identifier entered by the operator, reads one or more of the following values and uses them for the setting method:

- the minimum and maximum melt temperature;
- the minimum and maximum tool temperature;
- the maximum temperature for demolding;
- the thermal conductivity of the material.

## Revendications

1. Procédé de réglage pour établir de manière partiellement automatique un réglage de base opérationnel pour une presse d'injection (1) pour le traitement de matériaux de moulage en matière plastique, comprenant une détermination de paramètres de réglage appropriés avec le concours de moyens de réglage à l'aide d'un assistant de démarrage (15) interactif intégré par voie de logiciel dans un dispositif de commande (14) de la presse d'injection (1), lequel assistant de démarrage (15) guide un opérateur de la presse d'injection (1) au moins partiellement à travers des parties du processus de réglage en échangeant des instructions et informations essentielles pour le système entre l'assistant de démarrage (15) et un opérateur à l'aide d'une interface d'opérateur du dispositif de commande (14), le processus de réglage comprenant les phases suivantes:

A1.) saisie par un opérateur d'informations de base sur le matériau en matière plastique utilisé, l'outil de moulage (4) utilisé, la presse d'injection (1) utilisée et/ou d'autres configurations de machine, conditions de processus ou limites de processus prédéterminées ou souhaitées;

A2.) démarrage d'une phase d'essai (V) dans laquelle plusieurs cycles de fabrication entièrement ou partiellement réalisés sont mises en oeuvre avec des paramètres de processus différents et des caractéristiques de processus qui apparaissent sont déterminés automatiquement ou par interaction avec un opérateur par le fait qu'un opérateur constate que certains critères de vérification pour les pièces moulées sont remplis et que le résultat respectif est saisi dans l'assistant de démarrage (15),

et la détermination automatisée d'un ensemble de paramètres de processus et limites de processus appropriés étant effectuée sur la base

B1.) des informations de base saisies par un opérateur,

B2.) de règles et valeurs d'expérience imagées par voie de logiciel ou de banc de données dans l'assistant de démarrage (15), pour sélectionner des paramètres de réglage appropriés,

ainsi que sur la base

B3.) des caractéristiques de processus déterminés dans la phase d'essai (V) et des résultats de vérification constatés,

**caractérisé en ce que**,

avant le démarrage de la phase d'essai (V),

C1.) les conditions de processus ayant une influence particulière sur les caractéristiques de fluage du matériau de moulage, notamment la vitesse d'injection et la température du matériau, sont fixées provisoirement,

C2.) une caractéristique type pour le comportement de fluage respectif, notamment une viscosité du matériau de moulage utilisé, est déterminée par l'assistant de démarrage (15) au moins approximativement sous ces conditions provisoirement fixées, où pour cette détermination de la caractéristique type pour le comportement de fluage du matériau de moulage utilisé, est utilisé une injection libre sans outil de moulage (4) mis en place, uniquement par la buse injecté dans l'air libre,

C3.) et cette caractéristique type pour le comportement de fluage du matériau de moulage et, le cas échéant, d'autres caractéristiques de processus déterminées ou prédéterminées sont utilisées pour déterminer une valeur de réglage provisoire, à titre d'essai, pour la valeur à atteindre et/ou la valeur limite supérieure de la pression d'injection pour la phase d'essai (V) à démarrer ensuite.

**2.** Procédé selon la revendication 1, **caractérisé en ce que** l'action d'éjection est effectuée avec une vitesse d'éjection ou de fluage prédéterminée et/ou avec un débit prédéterminé en masse à travers une buse (7) d'une unité de plastification (5) de la presse d'injection (1), formant le passage vers l'outil de moulage (4) et avec une température prédéterminée du matériau de moulage et/ou de l'unité de plastification (5), et que la pression ou la chute de pression apparaissant à la buse (7) est déterminée directement ou indirectement, notamment à l'hydraulique pour une vis sans fin (9) de l'unité de plastification (5).

**3.** Procédé selon la revendication 2, **caractérisé en ce qu'**à partir de la vitesse d'éjection ou de fluage, de la chute de pression déterminée et des valeurs géométriques respectives de la buse (7), sont calculées, au moins approximativement, par l'assistant de démarrage (15), la viscosité ou une caractéristique type équivalente pour le comportement de fluage du matériau de moulage plastifié.

**4.** Procédé selon la revendication 2, **caractérisé en ce que** la pression dans une préchambre (11) de la buse de l'unité de plastification (5) est déterminée ou mesurée à plusieurs reprises pendant l'éjection de matériau de moulage et que pour déterminer le comportement de fluage, notamment la viscosité du matériau de moulage, la valeur maximale de plusieurs mesurages individuels ou de plusieurs calculs individuels est utilisée.

**5.** Procédé selon la revendication 1, **caractérisé en ce que**, pour déterminer la caractéristique type pour le comportement de fluage du matériau de moulage utilisé, est utilisée une table de valeurs d'expérience ou de valeurs prédéterminées du fabricant du matériau de moulage associée au matériau de moulage utilisé ou une formule d'approximation, à partir de laquelle au moins une valeur approximative pour la caractéristique type du comportement de fluage du matériau de moulage est déterminée en fonction d'au moins la vitesse d'éjection ou de fluage et de la température du matériau de moulage.

**6.** Procédé selon l'une quelconque des revendications précédentes, **caractérisé en ce que** la caractéristique type pour le comportement de fluage du matériau de moulage et une épaisseur moyenne de la paroi de la pièce moulée à produire sont utilisées comme valeurs d'entrée pour une table ou une formule d'approximation pour déterminer une valeur de démarrage initiale pour la valeur limite supérieure de la pression d'injection.

7. Procédé selon l'une quelconque des revendications précédentes, **caractérisé en ce que** la phase d'essai (V) est répartie en au moins les phases suivantes:

D1.) déterminer au moins de manière approximative le volume de l'espace creux dans l'outil de moulage (4) par une action d'injection en pression réglée ou en pression limitée de matériau de moulage et fixer ensuite provisoirement un point de commutation vers une phase de post-pression pour le matériau de moulage et déterminer le volume de dosage sur la base du matériau de moulage injecté dans l'outil d'injection (4) et sur la base du taux de remplissage de l'outil de moulage (4) constaté par l'opérateur;

D2.) effectuer une ou plusieurs fois des cycles de fabrication à titre d'essai, chaque fois sans phase de post-pression, où ensuite, en fonction du taux de remplissage obtenu ou constaté de l'outil d'injection, un ou plusieurs des paramètres comprenant la limitation de la pression d'injection, la vitesse d'injection, la condition de commutation vers la phase de post-pression, la température du matériau de moulage et/ou de l'outil de moulage sont adaptés dans le but d'une augmentation du taux de remplissage de l'outil de moulage;

D3.) effectuer une ou plusieurs fois des cycles de fabrication à titre d'essai, chaque fois avec application de post-pression, où ensuite, en fonction de la qualité obtenue ou constatée, notamment de la qualité de surface de la pièce moulée produite, le niveau de post-pression est adapté dans le but d'une amélioration de la qualité de surface.

8. Procédé selon l'une quelconque des revendications précédentes, **caractérisé en ce que** les saisies et les opérations de l'opérateur, les paramètres utilisés pour la mise en oeuvre des cycles de fabrication à titre d'essai et les caractéristiques de processus déterminées à cette occasion sont enregistrés dans un protocole.

9. Procédé selon l'une quelconque des revendications précédentes, **caractérisé en ce que**, avant le démarrage du procédé de réglage, une identité et/ou autorisation de l'opérateur est saisie et que le procédé de réglage ne peut être effectué qu'en cas d'autorisation constatée.

10. Procédé selon l'une quelconque des revendications précédentes, **caractérisé en ce que** la saisie des informations par l'utilisateur concernant le matériau en matière plastique, l'outil de moulage (4) et/ou la presse d'injection (1) comprend la saisie ou la lecture électronique de supports de données lisibles en machine, notamment de codes à barres ou de transpondeurs.

11. Procédé selon l'une quelconque des revendications précédentes, **caractérisé en ce que** le procédé de réglage peut être interrompu à au moins un point par une commande de l'opérateur et que l'assistant de démarrage (15) peut être terminé de manière anticipée.

12. Procédé selon l'une quelconque des revendications précédentes, **caractérisé en ce que** l'assistant de démarrage (15) peut être terminé de manière anticipée par une commande d'un opérateur, où ceux des procédés partiels sont encore terminés ou effectués par l'assistant de démarrage (15), ou ceux des états sont encore établis, par lesquels un arrêt sans dommage et un redémarrage sans problème de la presse d'injection (1) sont assurés.

13. Procédé selon l'une quelconque des revendications précédentes, **caractérisé en ce que** le nombre de cycles de fabrication effectués pendant la phase d'essai (V) est saisi continuellement et qu'en cas de dépassement d'un nombre maximal prédéterminé de phases d'essai (V) sans atteindre une qualité de fabrication satisfaisante, le procédé de réglage est automatiquement arrêté et un message d'erreur est édité.

14. Procédé selon l'une quelconque des revendications précédentes, **caractérisé en ce que** lors de l'appel de l'assistant de démarrage (15), les paramètres de processus préalablement réglés sont enregistrés et qu'en cas d'arrêt par anticipation du procédé de réglage, les paramètres de processus enregistrés sont rétablis.

15. Procédé selon l'une quelconque des revendications précédentes, **caractérisé en ce que**, lors de la détermination de paramètres de réglage et de limites de processus appropriés, l'assistant de démarrage (15) se réfère à une banque de données de matériaux et lit en fonction d'une désignation de matériau ou d'une identification par un ensemble de données, saisie par l'opérateur, une ou plusieurs des valeurs suivantes et les utilise pour le procédé de réglage :

la température minimale et maximale du matériau ;
la température minimale et maximale de l'outil ;
la température maximale de démoulage ;
la conductivité thermique du matériau.

# Fig.1

# Fig.2

# Fig.3

7

# Fig.4

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9941057 A1, Moldflow

- JP 61025816 A, Tsuoisu

**In der Beschreibung aufgeführte Nicht-Patentliteratur**

- **LANGECKER G. R.** Anfahrstrategie. Kunststoffe. Carl Hanser Verlag, Juli 1995
- **GISSING K. ; KNAPPE W.** Verzögerungsabhängiges Umschalten von Spritz- auf Nachdruck. *Österreichische Kunststoffzeitschrift,* Dezember 1981

- **SARHOLZ R.** Rechnerische Abschätzung des Spritzgießprozesses als Hilfsmittel zur Maschineneinstellung. *Dissertation an der RWTH Aachen,* 1980